# EUROPEAN PATENT SPECIFICATION

(11) **EP 0 863 781 B1**
(45) Date of publication and mention of the grant of the patent: **02.05.2002**
(21) Application number: 96941585.0
(22) Date of filing: 29.11.1996
(51) Int. Cl.: A62D 3/00, B09B 3/00, C04B 12/04, C09K 21/02

(54) **AQUEOUS SILICATE COMPOSITIONS**
WÄSSRIGE SILIKAT-ZUSAMMENSETZUNGEN
COMPOSITIONS DE SILICATE AQUEUSES

(30) Priority: 01.12.1995 DK 136495
(43) Date of publication of application: 16.09.1998
(73) Proprietor: Peter Kafton, 7400 Herning (DK)
(72) Inventor: CHRISTENSEN, Jorgen, Molgaard, DK-8310 Tranbjerg J (DK)
(74) Representative: Plougmann, Vingtoft & Partners A/S
(86) International application number: DK9600497
(87) International publication number: WO9720600

(56) References cited:
- DE-A- 2 100 627
- US-A- 4 748 066
- US-A- 4 765 630
- US-A- 5 130 051
- US-A- 5 132 144

## Description

### FIELD OF THE INVENTION

The present invention relates to aqueous silicate-containing solution compositions which are useful in the encapsulation of pollutants as well as for other purposes.

### BACKGROUND OF THE INVENTION

German Auslegeschrift No. 159797 describes the use of water glass-containing compositions for rendering oil or oil pollutants harmless. However, the compositions described therein are two-component composition systems requiring measuring of components and mixing at the site of use. German Auslegeschrift No. 1248197 describes compositions for adsorption of oils or solvents, the compositions in question being dry compositions consisting of mixtures of powdered water glass, solid salts and solid absorbent carriers.

### SUGARY OF THE INVENTION

It has now been found that it is possible to prepare single-component, aqueous solution compositions containing dissolved silicates as well as other components, said compositions making it possible to render pollutants harmless through encapsulation and furthermore being stable and not requiring any dissolution, measuring or mixing at the site of use.

Thus, the invention concerns a silicate-containing aqueous solution composition comprising
a) from 10% w/w to 50% w/w of a silicate compound selected from sodium and potassium silicates, or a mixture of such silicate compounds;
b) from 1% w/w to 5% w/w of a salt, the cations of which are selected from sodium and potassium ions, and the anions of which are selected from halogen, sulfate and carbonate ions, or a mixture of such salts;
c) from 0.25% w/w to 5% w/w of ethylene glycol; and
d) water.

### DETAILED DESCRIPTION OF THE INVENTION

Due to availability as well as-economic reasons, it is preferred that the silicate compound is a sodium silicate. As it will well known to the person skilled in the art, soluble silicates such as sodium silicate exists in several forms depending on, the one hand, the average number of silicon atoms present in the silicate anion, and, on the other hand, the average degree of salt formation among the available number of silicic acid hydroxy groups. In the case of sodium silicate, this relationship is often expressed as the Na₂O:SiO₂ molar ratio, and commercially available sodium silicate products and qualities may have a ratio within a quite wide range. Thus, sodium silicates useful in the present invention may have a Na₂O:SiO₂ molar ratio anywhere in the range from about 4:1 to about 1:4, preferably in the range from about 1:1 to 1:4. In this context, specific examples of sodium silicate components are those corresponding to an approximate average formula of Na₂SiO₃, Na₆Si₂O₇, Na₂Si₃O₇, or Na₂Si₄O₉, or mixtures thereof, in particular Na₂Si₃O₇.

It is preferred that the silicate compound, in particular sodium silicate, is present in the composition in an amount of 13-31% w/w, preferably 15-31% w/w, in particular 18-31% w/w, especially 21-31% w/w, such as 27% w/w.

The salt indicated under item b) above may e.g. be sodium chloride, sodium bromide, sodium iodide, sodium sulfate, sodium carbonate, potassium chloride, potassium bromide, potassium iodide, potassium sulfate or potassium carbonate, or mixtures of such salts. However, for reasons of availability and economy, it is preferred that the salt used as item b) is sodium chloride. The salt, in particular sodium chloride, may be present in an amount of 1-4% w/w, preferably 2-4% w/w, in particular about 3% w/w.

With respect to the ethylene glycol present as item c) above, it is believed that this component exercises a stabilizing effect in terms of long-term stability. Thus, in the absence of ethylene glycol, it has been found that the silicate-containing composition will gradually develop a solid precipitate indicating the possible beginnings of an undesirable silicate reaction. In a preferred embodiment, the ethylene glycol is present in an amount of 0.5-4% w/w, more preferably 0.5-3% w/w, in particular 0.5-2% w/w, especially 0.5-1% w/w, such as 0.7% w/w.

A presently preferred example of a composition according to the invention contains about 27% w/w of sodium silicate having an average formula close to Na₂Si₃O₇ (usually a Na₂O:SiO₂ molar ratio of 1:3.1), about 0.7 w/w of ethylene glycol, and about 3% w/w of sodium chloride, the remainder being water.

For certain applications, it may be desirable also to include some special additives such as surfactants, e.g. non-ionic surfactants such as ethoxylated fatty acids; de-foaming agents, e.g. silicone oils (such as dimethylpolysiloxane), or polyethylene oxide or polypropylene oxide; foaming agents for generating stable foams (for fireproofing or fire extinction), e.g. foaming agents based on synthetic surfactants. Such agents may be included in varying amounts, depending on the type and function, but typical contents are in the range from 0.1 to 5 % w/w.

One of the uses for which the compositions of the invention are particularly suitable is the treatment of polluted solids such as soil or sand polluted with oil or other hydrocarbon residues, coal tar, or industrial chemicals such as pesticides (e.g. Aldrin™, Endrin™ or Pentachloroplend™), heavy metal-polluted particulates such as fly ash, incinerator slag, soil from old industrial sites, residue from fluorescent light tubes ("strip lights"), and the like. Thus, it has been found that when such materials are treated with the compositions of the invention, the compositions are able, without any further treatment, to form glassy gels which very efficiently encapsulate the pollutants and/or the polluted material to an extent which significantly reduces or even eliminates the possibility of subsequent leaching of the material into the surroundings. This makes it possible to store the silicate-encapsulated pollutants and polluted materials at uncontrolled or only marginally controlled depository sites without any significant danger of the pollutants leaching into the environment such as ground water deposits.

There are indications that if the material to be encapsulated is also treated with water-soluble substances containing divalent cations such as calcium-containing substances, e.g. slaked lime, alongside with the composition of the invention, the encapsulation is more efficient. Without being bound to any theory, it is believed that this effect can be attributed to that fact divalent cations such as calcium are known to accelerate the gelling of water glass solutions.

It has furthermore been found that like pure water glass solutions, the compositions of the invention can also be used in the fireproofing of various materials, in particular absorbent materials, such as textiles, paper, cardboard, roof thatching etc, as well as household refuse. Upon treatment with the compositions of the invention, the material in question and any subcomponents thereof such as fibers, will become encapsulated in the glassy silicate gel. The advantage over ordinary water glass solutions is, however, that the effect is very rapid in that it is the gel formation which results in the fireproofing effect and not solely a drying effect such as when using ordinary pure water glass solutions. It is also contemplated that the fireproofing effect may be further improved by simultaneous treatment of the material in question with a resin for the purpose of preventing or reducing any migration of the composition, in particular if the treated object is subjected to direct weathering. Such resins could conceivably be aqueous resin dispersions such as commercially available dispersions of phenolic, acrylic, or styrene resins.

Likewise, it has been found that the compositions of the invention may also be used for extinguishing fires in materials which may only with difficulty or not at all be extinguished with water. Thus, it has been found that burning automobile rubber tires, which under normal circumstances cannot be extinguished by spraying with water, can in fact be extinguished effectively with compositions of the invention.

It has also been observed that compositions of the invention are able to prevent the ignition of materials, the burning of which does not require the provision of external oxygen, such as smokeless powder propellants for firearms, and it is contemplated that this effect can also be extended to propellants for missiles or explosives such as plastic explosives. Thus, the compositions of the invention may serve in eliminating or rendering harmless military surplus stores of such materials. Similarly, it may be also possible for the compositions to render harmless highly flammable substances such as those in military incendiary munitions, e.g. napalm substances of i.a. the plastics-gelled solvent/petrol mixture type.

When using the compositions of the invention for treating polluted solids, the compositions may be applied in amounts which vary over a wide range, depending on the type of pollutant, and the precise amount is not critical and may easily be established by the person skilled in the art through routine testing. However, as a general guide it may be said that a suitable amount of a composition of the invention may be from 1 up to 50 weight parts per 100 parts of the polluted solid, preferably from 2 to 10 weight parts. The composition may be applied in a very straightforward manner by simply pouring or spraying the composition onto the polluted material, e.g. oil-polluted soil, if the contamination is restricted to the surface parts of e.g. the soil. In the case of deeper located contaminations, the application can be done by drilling perforated pipes into polluted soil and pumping the composition into the soil. In the case of loose particulate materials such as fly ash, the composition of the invention may be simply sprayed over the material, optionally while performing some sort of mixing operation such as in a rotary drum mixer similar to a concrete mixer.

Similarly, when using the composition of the invention for fireproofing purposes, the composition may be used in amounts over a wide range, depending on such factors as the flammability of the material, its ability to absorb aqueous solutions. Typical amounts may be in the range from 2 to as much as 70 weight parts per 100 parts of the material to be fireproofed. The composition may (in the case of textiles or paper) be applied by spraying onto the material, or it may (in the case of large-bulk material such as refuse) be injected into the material in a manner known per se.

The invention is further illustrated by the following, nonlimiting examples.

### EXAMPLE 1

A composition was prepared from the following components:
1. 410 kg of a 33% w/w aqueous solution of sodium silicate having a Na₂O:SiO₂ molar ratio of 1:3.1.
2. 3.5 kg of ethylene glycol.
3. 100 kg of a 15% w/w aqueous solution of sodium chloride.

The composition was prepared by placing the sodium silicate solution in a 800 liter mixing container and gradually adding the ethylene glycol under vigorous agitation by means of a propeller stirrer. Subsequently, the sodium chloride solution was added gradually under vigorous agitation in the same manner. The resulting clear solution had a density of about 1.3 g/ml.

### EXAMPLE 2

This example concerns tests performed to examine changes in the leachability of organic contaminates from soil through treatment with a composition of the invention, namely the composition prepared in Example 1. The test was designed to test the ability of the composition to immobilize diesel oil and polychlorinated biphenyls (PCB) present as contaminants in soil.

### General description of the tests

### Materials:

The selection of the contaminants was done based on a variety of factors. Diesel oil was chosen primarily because it is the most widespread type of soil pollutant, and the PCB's was chosen primarily because of their high environmentally toxicity. Sand was used as a simplified model of a soil matrix. The reason for this type of soil was its relatively simple composition. By using sand it was intended to reduce the number of factors which could influence the results of the test. On the other hand, it should be noted that more complex types of soil will probably have a positive effect on the binding of contaminates to the matrix. Consequently, the test performed on sand should show a high degree of leaching of contaminants compared with other types of soil and can therefore be considered a more strict test.

### Preparation of test material:

The contaminants were applied to the sand in the laboratory by dissolving the diesel oil and PCB's in methylene chloride and mixing the solution with dry sand. The methylene chloride was evaporated while at the same time agitating the sand. In this manner, 1500 grams of sand was contaminated with 758 mg diesel oil, and another batch of 1500 grams of sand was contaminated with 785 mg PCB, corresponding to 505 ppm diesel oil and 523 ppm PCB, respectively.

After contamination, three small samples from each batch was taken out and analysed for controlling the homogeneity.

### Treatment with composition from Example 1:

After confirming the homogeneity of the contaminated batches, they were each divided into two: one for treatment with the composition and a blank without treatment.

The treatment was performed by spreading the sand batches out on aluminium trays and spraying with the composition until the sand was moist. 13 grams of the composition from Example 1 was used for each of the two 750 gram test sand batches, corresponding to 1.7% w/w of composition based on the sand samples.

After spraying, the sand was dried for 3 hours at room temperature. Two samples from each batch were taken out and analysed for control of the homogeneity.

### Leaching procedure:

For each component (i.e. diesel oil or PCB), six independent experiments were performed; three with treated sand and three with untreated sand.

In each experiment, 50 g of dry sand sample was added 100 ml of simulated rainwater (pH 4,0). The mixture was shaken mechanically for 16 hours. After separation, the water phase was isolated for further analysis.

### Chemical analysis:

After addition of internal standards, the above mentioned water phases were extracted with methylene chloride, and the extracts were analysed by GC-MS. The homogeneity tests directly on the sand samples before and after treatment with the composition were performed by taking out 50 grams of sand, adding internal standards and 5-10 ml of tap water and extracting with methylene chloride for 2 hours.

### Results

### Homogeneity tests:

The analyses for homogeneity of the contamination were performed both before and after treatment with the composition. The standard deviations on the triplicate determinations are shown in Table 1. The results include inhomogeneities in the batches as well as uncertainties in the chemical determination.

**Table 1:**

| Inhomogeneities in test batches. (Relative standard deviations) | | |
|---|---|---|
| | Diesel oil | PCB |
| Before treatment | 8.3 % | 11.8 % |
| After treatment | 6.3 % | 7.6 % |

### Encapsulation of contaminants:

The analyses of the sand batches before and after treatment show the amounts of contaminants which are extractable with the analytical method. The part which after treatment with composition was non-extractable could be considered as encapsulated. Table 2 shows the amount of encapsulated contaminants.

**Table 2:**

| Non-extractable amount of contaminant after treatment | | |
|---|---|---|
| | Diesel oil | PCB |
| Encapsulated | 61 % | 44% |

### Diesel oil:

Table 3 shows the results of the leach test for diesel oil. The sand had 25 mg of diesel oil added per 50 g of sand.

**Table 3:**

| Leachability for diesel oil in sand | | | | | |
|---|---|---|---|---|---|
| Sample No. | Treatment | µg leach | Mean µg | Std. µg | % rel. std. |
| 1 | Yes | 306 | 255 | 47 | 18 |
| 2 | Yes | 245 | | | |
| 3 | Yes | 214 | | | |
| 4 | No | 987 | 854 | 145 | 17 |
| 5 | No | 700 | | | |
| 6 | No | 874 | | | |

### PCB leach:

Table 4 shows the results of the leach test for PCB. The sand bad 26 mg of PCB added per 50 g of sand.

**Table 4:**

| Leachability for PCB in sand | | | | | |
|---|---|---|---|---|---|
| Sample No. | Treatment | µg leach | Mean µg | Std. µg | % rel. std. |
| 1 | Yes | 499 | 777 | 243 | 31 |
| 2 | Yes | 884 | | | |
| 3 | Yes | 948 | | | |
| 4 | No | 2064 | 1495 | 590 | 39 |
| 5 | No | 1534 | | | |
| 6 | No | 886 | | | |

### Conclusion

The leachability of diesel oil from sand was reduced by 70%, when treating the sand with the composition of Example 1. Similarly, the leachability of the PCB's from sand was reduced by 48%.

The experiments also showed a reduction in the extractable amount of contaminants after treatment the composition.
Diesel oil was reduced with 61%, while PCB was reduced with 44%.

### EXAMPLE 3

The purpose of the investigations in this example was to compare the leachants from fly ash and slags before and after treatment with a composition of the invention to encapsulate contaminating components like heavy metals in waste materials such as fly ash and slags, and thereby reduce the contamination of groundwater. The tests have been performed according to the European Prestandard CEN/TC292/WG2 Doc 25, Tenth Draft: "Compliance test for leaching of granular waste materials and sludges."

As indicators for the leachability, the 5 elements Ni, Cu, Zn, Pb and Cd were chosen. The reason for this choice was primarily that these elements give rise to serious environmental problems. Secondly; Zn was chosen because of the high content of this element in both fly ash and slags.

### Procedures

### Test materials:

The tests were performed on both treated and untreated samples of fly ash and slags. The samples were taken from a municipal incineration plant. The results of chemical analyses, showing the composition of the materials, are listed in Table 5 below. These results show good agreement with typical fly ash and slags (Niels Thygesen et al.: Risikoscreening af forureningskomponenter udvasket fra slagger. Vandkvalitetsinstituttet (VKI), Denmark 1992).

Because of the nature of the investigation it was necessary to dry the material and perform a size reduction in a jaw crusher to a size of at the most 2 mm.

**Table 5:**

| Composition of laboratory samples of fly ash and slags used in leaching tests | | | |
|---|---|---|---|
| WDXRF-analysis of fly ash and slags before leaching tests | | | |
| Element | Unit | Fly ash | Slags |
| Mg | g/kg | 12 | 9 |
| Al | g/kg | 63 | 49 |
| Si | g/kg | 268 | 308 |
| P | g/kg | 8 | 9 |
| S | g/kg | 41 | 24 |
| Cl | g/kg | 33 | 6 |
| K | g/kg | 20 | 11 |
| Ca | g/kg | 167 | 148 |
| Fe | g/kg | 15 | 51 |
| Zn | g/kg | 23 | 4 |
| Ti | g/kg | 15 | 9 |
| V | mg/kg | 210 | 120 |
| Cr | mg/kg | 770 | 500 |
| Ma | mg/kg | 1230 | 1220 |
| Co | mg/kg | 22 | 67 |
| Ni | mg/kg | 150 | 130 |
| Cu | mg/kg | 1300 | 1700 |
| As | mg/kg | 130 | 20 |
| Sr | mg/kg | 480 | 380 |
| Mo | mg/kg | 30 | 40 |
| Cd | mg/kg | 120 | <20 |
| Sn | mg/kg | 1240 | 200 |
| W | mg/kg | <20 | 30 |
| Pb | mg/kg | 6800 | 750 |

### Treatment with composition from Example 1:

Part of the dried samples of fly ash and slags were taken out and treated with the composition. The treatment was performed by spreading out the waste material on a tray in a uniform layer of approximately 1 cm and spraying it with the composition according to Example 1 until it was all just wetted. The amount of the composition used for the spraying was 470 ml/kg for fly ash and 240 ml/kg for slag. After spraying the material it was air dried for three days before proceeding with the leaching tests.

### Leaching tests:

The leaching tests were performed according to CEN/TC292/WG2 DOC 25 Rev. 10, procedure C. This means a two stage test at L/S = 2 and L/S = 2-10. L/S is an abbreviation for the liquid to solid ratio, which describes the ratio between the accumulated amount of liquid (L in liters) that at any given time has been in contact with the solid (S in kg of dry matter). L/S is expressed in l/kg.

The tests were performed on 4 different materials:
· Fly ash treated with the composition
· Dried fly ash
· Slag treated with the composition
· Dried slag

The details of the test method are described in the CEN-standard draft. In the presently used method, minor changes have been incorporated. Thus, the principle of the modified method is as follows:

200 ml of simulated rainwater (20 mg/l NaCl adjusted to pH 3.0 with HCl) was added to 100 grams of waste material. After half an hour of suspending the material, pH was re-adjusted to 3 with HCl. After shaking the suspension for 6 hours it was centrifuged, and the centrifugate was filtered and analysed.

The remaining waste material was re-suspended in 300 ml of simulated rainwater, and shaked for a further 18 hours. After shaking the suspension was centrifuged and the eluate was filtered and analysed. The agitation was performed in 500 ml glass bottles with teflon sealed screw caps. The agitation temperature was 22°C. All tests were done in duplicate.

### Chemical analyses:

All eluates from the leaching tests were analysed for the following parameters, the analysis for the content of metals being carried out by ICP (Inductively Coupled Plasma) emission spectrometry:
· pH
· Conductivity
· Chromium (Cr) content
· Nickel (Ni) content
· Copper (Cu) content
· Zinc (Zn) content
· Lead (Pb) content
· Cadmium (Cd) content

The analyses for chromium all showed values below the limit of detection, which was 0.02 mg/kg.

### Results

With respect to conductivity and pH, the various eluates from the samples gave the following results:

| Untreated fly ash: | | |
|---|---|---|
| First Eluate | Conductivity, 25°C: | 131 mS/cm |
| | pH: | 4.08 |
| Second Eluate | Conductivity, 25°C: | 55.3 mS/cm |
| | pH: | 5.26 |

| Treated fly ash: | | |
|---|---|---|
| First Eluate | Conductivity, 25°C: | 121 mS/cm |
| | pH: | 5.94 |
| Second Eluate | Conductivity, 25°C: | 38 mS/cm |
| | pH: | 6.32 |

| Untreated slag: | | |
|---|---|---|
| First Eluate | Conductivity, 20°C: | 72.5 mS/cm |
| | pH: | 5.49 |
| Second Eluate | Conductivity, 20°C: | 17.2 mS/cm |
| | pH: | 6.48 |

| Treated slag: | | |
|---|---|---|
| First Eluate | Conductivity, 20°C: | 76.8 mS/cm |
| | pH: | 6.10 |
| Second Eluate | Conductivity, 20°C: | 25.6 mS/cm |
| | pH: | 6.52 |

The concentrations of each of the 5 elements listed above were measured in the two eluates which successively had been in contact with the waste material. The analytical results are shown in Tables 6 and 7 below. The total amount of each element was calculated as the cumulative amount from the 2 eluates, relative to the amount of sample.

Table 6 shows the total amount of elements washed out of both treated and untreated fly ash. The table also shows the reduction in leachability by treatment with the composition according to Example 1.

Table 7 shows the total amount of elements washed out of both treated and untreated slags. The table also shows the reduction in leachability by treatment with the composition according to Example 1.

**Table 6:**

| Total amounts washed out from fly ash | | | |
|---|---|---|---|
| Element | Untreated mg/kg | Treated mg/kg | Reduction % |
| Nickel | 14 | 5 | 62 |
| Copper | 190 | 91 | 51 |
| Zinc | 12600 | 2800 | 77 |
| Lead | 590 | 60 | 90 |
| Cadmium | 120 | 61 | 49 |

**Table 7:**

| Total amounts washed from slags | | | |
|---|---|---|---|
| Element | Untreated mg/kg | Treated mg/kg | Reduction % |
| Nickel | 4.6 | 2.6 | 45 |
| Copper | 10.3 | 9.9 | 4 |
| Zinc | 560 | 150 | 72 |
| Lead | 0.24 | 0.17 | 29 |
| Cadmium | 0.62 | 0.59 | 5 |

### Conclusion

When comparing the leaching properties of waste material before and after treatment with the composition according to Example 1, the results demonstrate that for fly ash, the treatment has resulted in a quite effective reduction of the leaching of heavy metals, namely by between 50 and as high as 90% depending on the metal of interest.

For slag, the reduction was more varied, going from a relatively small reduction of a few per cent to more than 70%. It is believed that this may largely be explained by the treatment procedure used not succeeding in coating the entire surface and cavities in the slag granules.

### EXAMPLE 4

In this example, the product from Example 1 was used to treat polluted soil recovered from an industrial site, the main pollutant being automobile fuels, in particular diesel oil.

For each sample measurement, 500 g of soil was weighed into a 5 liter plastic bucket. With respect to those samples where slaked lime was added, the lime was added at this time followed by manual stirring to ensure good mixing of the lime into the soil sample. The amount indicated in the table below is expressed as parts by weight per 100 parts soil.

The soil sample, with or without added lime, was then treated with the composition of Example 1 in the amount indicated and for the time indicated by spraying the liquid composition using a hand-powered garden sprayer while at the same time stirring the soil sample. After the spraying treatment, the sample was allowed to dry by standing at room temperature for 2 hours under a slight air current from a fume hood.

The treated samples were then subjected to analysis according to the analytical method of the Danish Oliebranchens Miljøpulje (Oil Industry Environmental Comittee) for the determination of oil content in soil samples. The analytical method is based on solvent extraction and gaschromatography and was carried out along the following general lines:

The soil sample was slurried into 20 ml of a 0.05M sodium pyrophosphate solution, and the mixture was extracted with 20 ml of pentane on a shaking table for 2 hours. The pentane used contained an internal standard consisting of two compounds, namely bromobenzene (high-volatile standard) and o-terphenyl (low-volatile standard).

The gas chromatographic analysis was carried out at a relatively low temperature (ca. 35°C), and the calculation of the content of oil components was performed in a standard manner by integration of the curve areas for components having retention times corresponding to the C₆-C₁₀ alkane series, the C₁₀-C₂₈ alkane series, and the C₂₈-C₃₅ alkane series.

Also included in the analysis programme was a reference sample of untreated soil as well as a sample treated only with water in order to establish any effects exerted by the water, content of the composition from Example 1.

The results obtained are shown in Table 8 below.

**Table 8**

| | Treated (%) | | | | | |
|---|---|---|---|---|---|---|
| Sample | Composition | Lime | Water | Treatment time [min] | Diesel [mg/kg] | % reduction |
| A | 11 | | | 10 | 460 | 80 |
| B | 8 | | | 10 | 660 | 71 |
| C | 10 | | | 10 | 500 | 78 |
| D | | | 5 | 10 | 1700 | 26 |
| E | 5 | 5 | | 5 | 640 | 72 |
| F | 5 | 10 | | 5 | 120 | 95 |
| G | 10 | 5 | | 5 | 720 | 69 |
| H | 10 | 10 | | 5 | 19 | 99 |
| J | | | | - | 2300 | reference |

From the results it can be seen, that although water and the manual treatment did cause a minor reduction of the extractable organic matter, the composition according to the invention, when used alone, brought about a high reduction of extractable organic matter, namely up to 80% with a certain dependency on the amount of composition added. Furthermore, when also pretreating the polluted soil with slaked lime, the reduction in extractable organic matter reached as high as 99%. Without being bound to any theory, it is believed that since slaked lime adds soluble calcium ions to the system, and the polymerisation or gelling of dissolved silicates is improved in the presence of divalent ions, the slaked lime probably contributes to the encapsulation of the pollutants by improving the gelling reaction.

### EXAMPLE 5

This example concerns the properties of compositions of the invention with respect to fireproofing flammable objects and materials, in this case various types of paper board.

### Experiment a)

Approximately 100 g of finely shredded newsprint was treated with a sufficient amount of the composition from Example 1 to soak all of the newsprint. The wet mass was then manually compressed to a wet board followed by drying at 110°C for 20 minutes and cooling at ambient temperature for 1 hour and subsequent drying at ambient temperature for 2 days. The dried board measured 290 mm by 200 mm by 18.5 mm thick and had a density og 677 kg/m³.

The board was tested in accordance with ISO 2856 (a civil aviation materials test standard) involving heating with a propane burner. In this test, the material was subjected to the flame from a 178 mm diameter ISO 2685:1992(E) standard propane burner at a distance of 75 mm from the burner. The flame temperature was monitored by means of thermocouples close to the surface of the material, and the unexposed side of the material also had thermocouples mounted on it. The maximum temperature reached was 1080°C, and the total exposure time was 15 minutes.

Up to about 13 minutes after initiation of the test, there was no visible flame attributable to the material; only small quantities of smoke could be observed on the reverse and unexposed side of the board with slight increase of the smoke development with time. At 13 minutes after start and until the end of the test (15 min.), intermittent to sustained flames could be observed on the unexposed side. After removal of the burner after 15 min, flames continued for a further 1.3 minutes, whereupon the flames extinguished by themselves. Measurements of the board after the test revealed that it had shrunk slightly in width and had lost approx. 80% in weight and had a hard surface coating.

It is concluded that the composition of the invention is highly effective in flame-proofing flammable materials.

### Experiment b)

A mixture of 150 g detoxified hemp fibres was mixed with 200 g of the composition from Example 1 followed by compression and drying in the same manner as in Experiment a). The obtained board was subjected to the flame of a gas Bunsen burner (about 800°C) for 15 minutes. No deterioration (apart from some blackening) was observed.

### Experiment c)

A mixture of 220 g sawdust, 100 g polyvinyl alcohol solution glue (Unibond), 75 g 5 mm paper chip, 100 g of the composition from Example 1, and 750 ml water was mixed well and compressed at 2 bar pressure to remove excess fluid, and then air-dried at ambient temperature for 36 hours. The resulting dried board was heated to 800°C as in experiment b), and no deterioration was observed, and no toxic fumes were developed.

### EXAMPLE 6

This example concerns the encapsulation of a heavy metal-containing residue, namely fluorescent light tube residues, the primary pollutants of which are mercury, cadmium, zinc, copper and arsenic. First, a tube had its aluminium end caps removed, and the glass tube itself with the contaminants was crushed to fine fragments.

The crushed tube (47 g) was mixed dry with 100 g of 10 mm paper chips. 120 g of water and 20 g of PVA (polyvinyl alcohol) was mixed well into a fluid composition followed by addition of 100 g of the composition from Example 1 and renewed mixing. The crushed glass and paper chip mixture was added to the fluid mixture and mixed well in a blender for 5 minutes, and by means of a mincer, the mixture was fed into a cylindrical plastic sheath and maintained at 24°C for 12 hours on a heating element. The plastic sheath was the removed, and the resulting cylindrical body allowed to air dry at room temperature over 12 hours.

The resulting solid body showed no signs of shredding at the edges or of breaking up.

### EXAMPLE 7

Treatment of firearms propellant powder.

A sample of 50 grammes of Pyrodex (a double base smokeless gunpowder from Hercules, USA) was placed on a sheet of paper and sprayed with a sufficient amount of the composition from Example 1 to moisten each grain and mixed. The black powder granules turned into a gray paste, and the paste was spread out on the paper and dried for about one half hour at ambient temperature. After drying, it was attempted to ignite a sample of the treated powder with a propane blowtorch (flame temperature ca. 1000°C), but no explosion or burning was observed.

Comparative tests using the same powder treated in the same manner with the composition from Example 1 diluted with water (1 part composition, 4 parts water) gave the result that the powder exploded or burnt violently when subjected to the propane blowtorch.

It was therefore concluded that the composition of the invention is highly effective in rendering the propellant powder harmless.

## Claims

1. A silicate-containing aqueous solution composition comprising
a) from 10% w/w to 50% w/w of a silicate compound selected from sodium and potassium silicates, or a mixture of such silicate compounds;
b) from 1% w/w to 5% w/w of a salt, the cations of which are selected from sodium and potassium ions, and the anions of which are selected from halogen, sulfate and carbonate ions, or a mixture of such salts;
c) from 0.25% w/w to 5% w/w of ethylene glycol; and
d) water.

2. A composition as claimed in claim 1 wherein the silicate compound is a sodium silicate.

3. A composition as claimed in claim 2 wherein the sodium silicate has a Na₂O:SiO₂ molar ratio in the range from about 4:1 to about 1:4, preferably from about 1:1 to about 1:4.

4. A composition as claimed in claim 3 wherein the sodium silicate has an average formula of Na₂SiO₃, Na₆Si₂O₇, Na₂Si₃O₇, or Na₂Si₄O₉, or mixtures thereof, in particular Na₂Si₃O₇.

5. A composition as claimed in any of claims 1-4 wherein the silicate compound is present in an amount of 13-31% w/w, preferably 15-31% w/w, in particular 18-31% w/w, especially 21-31% w/w, such as about 27% w/w.

6. A composition as claimed in any of claims 1-5 wherein the salt is sodium chloride.

7. A composition as claimed in any of claims 1-6 wherein the salt is present in an amount of 1-4% w/w, preferably 2-4% wlw, in particular about 3% w/w.

8. A composition as claimed in any of claims 1-7 wherein the ethylene glycol is present in an amount of 0.5-4% w/w, preferably 0.5-3% w/w, in particular 0.5-2% w/w, especially 0.5-1% w/w, such as 0.7% w/w.

9. A composition as claimed in any of claims 1-8 which comprises about 27% w/w of sodium silicate having an average formula close to Na₂Si₃O₇ (with a Na₂O:SiO₂ molar ratio of 1:3.1), about 0.7 % w/w of ethylene glycol, and about 3% w/w of sodium chloride, the remainder being water.

10. A method for encapsulating pollutants, said method comprising applying to the pollutants or the material containing them a composition according to any of claims 1-9 in an amount sufficient to encapsulate the pollutants.

11. A method for fireproofing a flammable solid, said method comprising applying to the flammable solid a composition according to any of claims 1-9 in an amount sufficient to fireproof the flammable solid.

12. A method for extinguishing a fire, said method comprising applying to the fire a composition according to any of claims 1-9 in an amount sufficient to extinguish the fire.

## Patentansprüche

1. Silikat-beinhaltende wäßrige Lösungszusammensetzung umfaßend
a) 10 Gew.-% bis 50 Gew.-% einer Silikatverbindung gewählt aus Natrium- und Kaliumsilikaten, oder ein Gemisch solcher Silikatverbindungen;
b) 1 Gew.-% bis 5 Gew.-% eines Salzes, dessen Kationen aus Natrium- und Kaliumionen gewählt sind und dessen Anionen aus Halogen-, Sulfat- und Karbonationen gewählt sind, oder ein Gemisch solcher Salze;
c) 0,25 Gew.-% bis 5 Gew.-% Ethylenglykol; und
d) Wasser.

2. Zusammensetzung nach Anspruch 1, in der die Silikatverbindung ein Natriumsilikat ist.

3. Zusammensetzung nach Anspruch 2, in der das Natriumsilikat ein Molverhältnis Na₂O:SiO₂ in einem Bereich von ca. 4:1 bis ca. 1:4, vorzugsweise von ca. 1:1 bis ca. 1:4, hat.

4. Zusammensetzung nach Anspruch 3, in der das Natriumsilikat eine durchschnittliche Formel Na₂SiO₃, Na₆Si₂O₇, Na₂Si₃O₇ oder Na₂Si₄O₉ hat oder Gemische davon, insbesondere Na₂Si₃O₇.

5. Zusammensetzung nach einem der Ansprüche 1-4, in der die Silikatverbindung in einer Menge von 13-31 Gew.-%, vorzugsweise 15-31 Gew.-%, insbesondere 18-31 Gew.-%, besonders 21-31 Gew.-%, wie ca. 27 Gew.-%, vorliegt.

6. Zusammensetzung nach einem der Ansprüche 1-5, in der das Salz Natriumchlorid ist.

7. Zusammensetzung nach einem der Ansprüche 1-6, in der das Salz in einer Menge von 1-4 Gew.-%, vorzugsweise 2-4 Gew.-%, insbesondere ca. 3 Gew.-%, vorliegt.

8. Zusammensetzung nach einem der Ansprüche 1-7, in der das Ethylenglykol in einer Menge von 0,5-5 Gew.-%, vorzugsweise 0,5-3 Gew.-%, insbesondere 0,5-2 Gew.-%, besonders 0,5-1 Gew.-%, wie 0,5 Gew.-%, vorliegt.

9. Zusammensetzung nach einem der Ansprüche 1-8, die ca. 27 Gew.-% eines Natriumsilikats mit einer durchnittlichen Formel nahe Na₂Si₃O₇ (mit einem Molverhältnis von Na₂O:SiO₂ von 1:3,1), ca. 0,7 Gew.-% Ethylenglykol, ca. 3 Gew.-% Natriumchlorid und den Rest Wasser umfaßt.

10. Verfahren zum Einkapseln verunreinigender Substanzen, welches die Applikation einer Zusammensetzung nach einem der Ansprüche 1-9 an die verunreinigenenden Substanzen oder das diese beinhaltende Material in einer Menge, die ausreicht, um die verunreinigenden Substanzen einzukapseln, umfaßt.

11. Verfahren zur Feuersicherung eines entzündlichen Feststoffes, welches die Applikation einer Zusammensetzung nach einem der Ansprüche 1-9 an den entzündlichen Feststoff in einer Menge, die ausreicht, um den entzündlichen Feststoff feuerfest zu machen, umfaßt.

12. Verfahren zum Löschen von Feuer, welches die Applikation einer Zusammensetzung nach einem der Ansprüche 1-9 an das Feuer in einer Menge, die ausreicht, um das Feuer zu löschen, umfaßt.

## Revendications

1. Composition de solution aqueuse contenant du silicate et comprenant
a) de 10% en poids à 50% en poids d'un composé de silicate choisi parmi les silicates de sodium et de potassium, ou un mélange de tels composés de silicate;
b) de 1% en poids à 5% en poids d'un sel dont les cations sont choisies parmi les ions de sodium et de potassium et dont les anions sont choisis parmi les ions d'halogène, de sulfate et de carbonate, ou un mélange de tels sels;
c) de 0,25% en poids à 5% en poids d'éthylène glycol; et
d) de l'eau.

2. Composition selon la revendication 1, dans laquelle le composé de silicate est un silicate de sodium.

3. Composition selon la revendication 2, dans laquelle le silicate de sodium a un rapport molaire Na₂O:SiO₂ d'environ 4:1 à environ 1:4, de préférence d'environ 1:1 à environ 1:4.

4. Composition selon la revendication 3, dans laquelle le silicate de sodium a la formule moyenne Na₂SiO₃, Na₆Si₂O₇, Na₂Si₃O₇ ou Na₂Si₄O₉ ou leurs mélanges, en particulier Na₂Si₃O₇.

5. Composition selon l'une quelconque des revendications 1 à 4, dans laquelle le composé de silicate est présent dans une quantité de 13 à 31% en poids, de préférence de 15 à 31% en poids, en particulier de 18 à 31% en poids, notamment de 21 à 31% en poids, par exemple d'environ 27% en poids.

6. Composition selon l'une quelconque des revendications 1 à 5, dans laquelle le sel est le chlorure de sodium.

7. Composition selon l'une quelconque des revendications 1 à 6, dans laquelle le sel est présent dans une quantité de 1 à 4% en poids, de préférence de 2 à 4% en poids, en particulier d'environ 3% en poids.

8. Composition selon l'une quelconque des revendications 1 à 7, dans laquelle l'éthylène glycol est présent dans une quantité de 0,5 à 4% en poids, de préférence de 0,5 à 3% en poids, en particulier de 0,5 à 2% en poids, notamment de 0,5 à 1% en poids, par exemple de 0,7% en poids.

9. Composition selon l'une quelconque des revendications 1 à 8 comprenant environ 27% en poids de silicate de sodium de la formule moyenne voisine de Na₂Si₃O₇ (avec un rapport molaire Na₂O:SiO₂ de 1:3,1), environ 0,7% en poids d'éthylène glycol et environ 3% en poids de chlorure de sodium, le reste étant de l'eau.

10. Procédé d'encapsulation de polluants, ledit procédé comprenant l'application sur les polluants ou la matière les contenant d'une composition selon l'une quelconque des revendications 1 à 9 dans une quantité suffisante pour encapsuler les polluants.

11. Procédé d'ignifugation d'un solide inflammable, ledit procédé comprenant l'application sur le solide d'une composition selon l'une quelconque des revendications 1 à 9 dans une quantité suffisante pour rendre incombustible le solide inflammable.

12. Procédé d'extinction d'une incendie, ledit procédé comprenant l'application sur l'incendie d'une composition selon l'une quelconque des revendications 1 à 9 dans une quantité suffisante pour éteindre l'incendie.
